# EUROPEAN PATENT APPLICATION

(11) **EP 3 543 373 A1**
(43) Date of publication of application: **25.09.2019**
(21) Application number: 17872291.4
(22) Date of filing: 16.11.2017
(51) Int. Cl.: C23C 24/04, B23K 11/30, B24B 29/00

(54) **METHOD FOR COATING ELECTRODE FOR RESISTANCE WELDING, AND ELECTRODE FOR RESISTANCE WELDING**

(30) Priority: 17.11.2016 KR 20160153390
(71) Applicant: POSCO, Pohang-si, Gyeongsangbuk-do 37859 (KR); Research Institute of Industrial Science & Technology, Pohang-si, Gyeongsangbuk-do 37673 (KR)
(72) Inventor: YOON, Sanghoon, Pohang-si Gyeongsangbuk-do 37835 (KR); KIM, Hyung Jun, Pohang-si Gyeongsangbuk-do 37665 (KR); BAE, Gyuyeol, Pohang-si Gyeongsangbuk-do 37859 (KR)
(74) Representative: Potter Clarkson
(86) International application number: PCT/KR2017/013038
(87) International publication number: WO 2018/093178

(57) **Abstract**

A coating method for a resistance-welding electrode and the resistance-welding electrode are provided. According to the present invention, it includes: a tungsten carbide preparation step for preparing tungsten carbide (WC) as a coating material for being coated on an electrode surface; a tungsten carbide powder formation step for forming the tungsten carbide (WC) into a tungsten carbide powder having a predetermined average particle size; and a tungsten carbide powder coating step for performing coating with a predetermined coating thickness to the electrode surface by spraying the tungsten carbide (WC) powder at a high speed by a cold spray coating process that is capable of coating at room temperature without powder melting.

## Description

### [Technical Field]

The present invention relates to a coating method for a resistance-welding electrode and to the resistance-welding electrode, and more particularly, to a coating method for a resistance-welding electrode used in resistance welding (spot resistance welding, projection resistance welding, etc.) in order to increase a lifetime thereof, and the resistance-welding electrode.

### [Background Art]

Electrical resistance welding is a widely used welding method in which materials to be welded are brought into contact with each other and an electrode made of a copper-based alloy is used to allow a current to flow in the two electrodes, and when the temperature of contacted surfaces is increased due to resistance heat thus-generated in the materials, they are pressurized and welded.

An electrode made of a copper-based alloy (Cu-Cr, Cu-Be, Cu-Cr-Ni, or the like) is generally used as a resistance-welding electrode for improving electrical conductivity and strength. However, the welding is repeated several times, the electrode made of the copper-based alloy is resultantly worn and deteriorated by an arc heat generated in the welding, and welding quality is drastically reduced, so that the electrode is replaced or the electrode surface is polished to be reused.

As a result, productivity is lowered due to the deterioration of electrode life (including electrode replacement, electrode surface polishing, and reinstallation time). In particular, when an Al-based coated steel sheet or a Zn-based coated steel sheet containing a low-melting-point alloy is welded, a low-melting-point plating material reacts with an electrode, which is a heat generating region, and a plating layer adheres to the electrode, thereby shortening the lifetime of the electrode. Particularly, when the coated steel sheet is welded by using a Zn-based alloy that is widely used as a steel sheet for vehicles, the lifetime of the electrode is drastically lowered to 10 % or less than that of a general steel sheet. This frequently causes welding interruption and electrode polishing, thereby deteriorating production and increasing electrode usage cost.

### [Disclosure]

The present invention has been made in an effort to provide a coating method for a resistance-welding electrode, and the resistance-welding electrode, which coats tungsten carbide (WC) powder on a surface of the electrode by using a low temperature spray coating process, in order to improve the electrode lifetime and welding quality by preventing electrode deterioration and suppressing a reaction with a plating layer when a thin plate, particularly a plated thin plate, is resistance-welded.

An exemplary embodiment of the present invention provides a coating method of a resistance-welding electrode, including:
a tungsten carbide preparation step for preparing tungsten carbide (WC) as a coating material for being coated on an electrode surface;
a tungsten carbide powder formation step for forming the tungsten carbide (WC) into a tungsten carbide powder having a predetermined average particle size; and
a tungsten carbide powder coating step for performing coating with a predetermined coating thickness to the electrode surface by spraying the tungsten carbide (WC) powder at a high speed by a cold spray coating process that is capable of coating at room temperature without powder melting,
wherein the tungsten carbide (WC) powder formed in the tungsten carbide powder formation step contains tungsten carbide (WC) in a range of 95 wt% or more and less than 100 wt%, at least one material selected from a group including Co, Ni, Cu, and Cr or alloys thereof as a remnant, and other inevitable impurities.

The average particle size of the tungsten carbide powder in the tungsten carbide powder forming step may be in a range of 1 µm to 50 µm.

The coating thickness may be in a range of 10 µm to 100 µm.

The resistance-welding obtained according to the electrode coating method may have welding strength of 6 kN or more at 400 points or more in the case of spot welding.

The coating method may further include a coated surface polishing step for polishing a coated surface after coating the electrode surface in the tungsten carbide powder coating step.

The cold spray process may accelerate the injection gas under a predetermined heating temperature and pressure condition to cause the tungsten carbide powder to collide with the electrode surface to be deposited thereon.

The injection gas may be formed to include one of nitrogen and helium, or a mixture of these gases.

The heating temperature of the injection gas may be in a range of 200 °C to 1100 °C.

The predetermined pressure of the injection gas may be in a range of 15 bar to 75 bar.

The tungsten carbide (WC) powder particles may be deposited in the depth direction on the electrode surface to form a coating layer in the tungsten carbide powder coating step.

A depth of the tungsten carbide (WC) powder particles deposited on the electrode surface in the coating layer may be between 5 µm and 50 µm, inclusive.

In addition, according to an exemplary embodiment of the present invention, the resistance-welding electrode may include: an electrode surface constituting an outer surface of the electrode; and
a coating layer formed to have a predetermined coating thickness by spraying a tungsten carbide (WC) powder, which is a coating material to be coated on the electrode surface, at a high speed under a predetermined heating temperature and pressure condition together with an injection gas by a cold spray coating process that is capable of coating at room temperature without powder melting,
wherein the tungsten carbide (WC) powder contains tungsten carbide (WC) in a range of 95 wt% or more and less than 100 wt%, at least one material selected from a group including Co, Ni, Cu, and Cr or alloys thereof as a remnant, and other inevitable impurities, and
the coating layer is formed by depositing the tungsten carbide (WC) powder particles in a depth direction on the electrode surface.

The average particle size of the tungsten carbide powder may be in a range of 1 µm to 50 µm.

The coating thickness may be in a range of 10 µm to 100 µm.

A depth of the tungsten carbide (WC) powder particles deposited on the electrode surface in the coating layer may be between 5 µm and 50 µm, inclusive.

The injection gas may be formed to include one of nitrogen and helium, or a mixture of these gases.

The heating temperature of the injection gas may be in a range of 200 °C to 1100 °C.

The predetermined pressure of the injection gas may be in a range of 15 bar to 75 bar.

According to the exemplary embodiment of the present invention, welding productivity may be improved by the increased electrode lifetime, the improved welding quality, and the extended electrode polishing cycle, and electrode consumption cost may be reduced by the increased electrode lifetime.

### [Description of the Drawings]

FIG. 1 illustrates a schematic diagram of a coating method for a resistance-welding electrode according to an exemplary embodiment of the present invention.
FIG. 2 illustrates a cross-sectional photograph of a coated electrode surface of Comparative Example 1 before polishing.
FIG. 3 illustrates a cross-sectional photograph of a coated electrode surface of Comparative Example 2 before polishing.
FIG. 4 illustrates a cross-sectional photograph of a coated electrode surface of Inventive Example 1 before polishing according to an exemplary embodiment of the present invention.
FIG. 5 illustrates a schematic diagram of a coating apparatus for a resistance-welding electrode according to an exemplary embodiment of the present invention.

### [Mode for Invention]

The present invention will be described more fully hereinafter with reference to the accompanying drawings, in which exemplary embodiments of the invention are shown. As will be readily appreciated by one of ordinary skill in the art to which the present invention belongs, exemplary embodiments described below may be modified in various forms without departing from the concept and scope of the present invention. Wherever possible, the same or similar parts are denoted using the same reference numerals in the drawings.

The terminologies used herein are used just to illustrate a specific exemplary embodiment, but are not intended to limit the present invention. It must be noted that, as used in the specification and the appended claims, the singular forms used herein include plural forms unless the context clearly dictates the contrary. It will be further understood that the term "comprises" or "includes", used in this specification, specifies stated properties, regions, integers, steps, operations, elements, and/or components, but does not preclude the presence or addition of other properties, regions, integers, steps, operations, elements, components, and/or groups.

All terms including technical terms and scientific terms used herein have the same meaning as the meaning generally understood by a person with ordinary skill in the art to which the present invention pertains. The terminologies that are defined previously are further understood to have the meaning that coincides with relating technical documents and the contents that are disclosed currently, but are not to be interpreted as the idealized or very official meaning unless so defined.

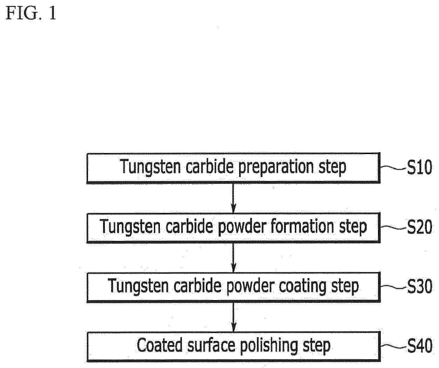

FIG. 1 illustrates a schematic diagram of a coating method for a resistance-welding electrode according to an exemplary embodiment of the present invention.

Referring to FIG. 1, according to the present exemplary embodiment, the coating method for the resistance-welding electrode is provided as a coating method of a surface of an electrode to increase a lifetime of the electrode when a thin plate, particularly a Zn, Al, etc.-plated steel plate is resistance-welded, and the coating method may include:
a tungsten carbide preparation step (S10) for preparing tungsten carbide (WC) as a coating material for being coated on the electrode surface;
a tungsten carbide powder formation step (S20) for forming the tungsten carbide (WC) into a tungsten carbide (WC) powder having a predetermined average particle size; and
a tungsten carbide powder coating step (S30) for coating the tungsten carbide (WC) powder to have a predetermined coating thickness by spraying it onto the surface of the electrode at a high speed.

The tungsten carbide (WC) powder formed in the tungsten carbide powder formation step (S20) may contain tungsten carbide (WC) in a range of 95 wt% or more and less than 100 wt%, at least one material selected from a group including Co, Ni, Cu, and Cr or alloys thereof as a remnant, and other inevitable impurities.

The coating method may further include a coated surface polishing step (S40) for polishing the coated surface after the surface of the electrode is coated in the tungsten carbide powder coating step (320).

In addition, the coated surface polishing step (S40) may be performed by polishing the coated surface with predetermined surface roughness using a polishing pad or a polishing machine.

In the tungsten carbide preparation step S10, tungsten carbide (WC) having excellent electrical conductivity and abrasion resistance while minimizing reaction with a low melting point plating material such as zinc (Zn) and aluminum (Al) is used as the coating material.

In the tungsten carbide powder formation step S20, the tungsten carbide may be pulverized by a pulverizer or the like to form a tungsten carbide powder having an average particle size.

The tungsten carbide (WC) powder may be mixed with a metal powder such as Cu or Ni in order to improve a stacking efficiency. However, as seen from results of Comparative Examples 1 and 2, the reaction between the metal and the low-melting-point plating layer such as zinc (Zn) is increased, and the plating layer adheres to the electrode, so that the effect of increasing the lifetime of the electrode may not be observed, and thus the tungsten carbide (WC) powder containing tungsten carbide (WC) in a range of 95 wt% or more and less than 100 wt% is used.

In the tungsten carbide powder formation step S20, the average particle size of the tungsten carbide powder may be in the range of 1 µm to 50 µm.

As described above, a reason for limiting the average particle size of the tungsten carbide powder is that, in the case of a cold spray coating material, a powder having a particle size of 1 µm or less is too light to form a coating layer, and when the particle size is 50 µm or more, the stacking efficiency is reduced because the particles cannot be accelerated to a sufficient speed under the same process conditions.

Therefore, in general, the average particle size of the tungsten carbide powder (material) used in the cold spray coating is preferably in the range of 1 to 50 µm in views of coating layer formation and stacking efficiency.

The tungsten carbide powder coating step (S30) may be performed by a cold spray coating process that is capable of coating at room temperature without powder melting, in order to easily adjust coating thickness and prevent decarburization of tungsten carbide (WC).

The coating thickness of the electrode may be in a range of 10 µm to 100 µm.

A reason that the coating thickness is set as described above is that it is difficult to see an effect of the coating when the coating thickness is less than 10 µm, and welding defects due to an increase in electrical resistance and the possibility of coating peeling are increased when the coating thickness is 100 µm or more.

Therefore, the coating thickness of the electrode is preferably in the range of 10 µm to 100 µm from the viewpoint of coating effect, prevention of welding defects, and coating peeling due to an increase of electrical resistance.

Herein, an electrode made of a Cu-based alloy (an alloy selected from the group including Cu-Cr, Cu-Be, and Cu-Cr-Ni) may be used.

As described above, since the coating process is performed only by the cold spray coating process without melting the powder in the present invention as compared with a conventional thermal spray coating process, the tungsten carbide (WC) powder particles are deposited onto the surface of a base material (electrode) in a depth direction to form a coating layer.

Herein, the depth direction of the surface of the base material (electrode) indicates a direction that is perpendicular to the surface from the surface toward an interior thereof.

A depth at which the tungsten carbide (WC) powder particles are deposited onto the surface of the base material (electrode) in the coating layer may be 5 µm or more and 50 µm or less.

That is, unlike the conventional thermal spray coating process, the cold spray coating process of the present invention is a process of forming a coating layer in a solid phase state by accelerating the coating material at a very high speed at room temperature without exposing and melting the coating material (powder) by a high temperature flame and by colliding the accelerated coating material with the surface of the base material (electrode) such that the surface of the base material (electrode) and the powder particles, and the powder particles themselves, are physically bonded at interfaces therebetween.

Therefore, the present invention has the following features and advantages of the cold spray coating process of the present invention compared with the conventional thermal spray coating process:
(1) When the hard carbon tungsten (WC) powder particles collide against a soft base material (Cu-based electrode), they are deposited onto a surface of the base material (electrode).
   The depth at which the tungsten carbide (WC) powder particles are deposited onto the surface of the base material (electrode) in the depth direction may be 5 µm or more and 50 µm or less depending on a process condition and particle size.
   However, in the conventional thermal spray coating process, since fused particles collide with the base material (electrode) to solidify, such particle deposition does not occur unlike in the present invention.
(2) It is a coating process by high-speed collision, leading to excellent bonding force, and thus grit blasting, which serves to roughen the surface of the base material (electrode), is not required before coating.

However, in the conventional thermal spray coating process, since the molten particles needs to collide and solidify to form a mechanical bond, the surface of the base material (electrode) before coating is roughened to enlarge the contact area as much as possible, and thus the resistance-welding electrode in which the surface roughness Ra of 5 to 20 µm is formed is used.

In addition, the cold spray coating process is a process of depositing the tungsten carbide powder by accelerating an injection gas, which is a process gas, at an extremely high speed under a predetermined heating temperature and pressure condition, and then by transporting the tungsten carbide powder as a coating material at room temperature to collide with the base material (electrode).

Herein, a purpose of raising the temperature and pressure of the process gas is not to dissolve the coating material but to just give it speed.

Herein, the injection gas may be formed to include one of nitrogen and helium, or a mixture of these gases.

In addition, the heating temperature of the injection gas may be in a range of 200 °C to 1100 °C.

A reason for setting the heating temperature range of the injection gas in this manner is that deposition does not occur because the particle speed is low in a condition where the heating temperature of the injection gas is lower than 200 °C, and
the particle speed is too fast to cause cracks in the base material in a condition where the heating temperature of the injection gas is higher than 1100 °C.

In addition, the predetermined pressure of the injection gas may be in a range of 15 bar to 75 bar.

A reason for setting the pressure range of the injection gas in this manner is that deposition does not occur because the particle speed is low in a condition where the pressure of the injection gas is lower than 15 bar, and
the particle speed is too fast to cause cracks in the base material in a condition where the pressure of the injection gas is higher than 75 bar.

Hereinafter, a process of a coating method for a resistance-welding electrode according to an exemplary embodiment of the present invention will be described with reference to FIG. 1.

As a coating material for being coated on a surface of the electrode, tungsten carbide (WC) composed only of 100 % tungsten carbide (WC) without mixing of a metal powder is prepared (S10), and as a powder, a predetermined average particle size of the tungsten carbide is in a range of 1 µm to 50 µm, for example (S20).

Herein, tungsten carbide (WC) having excellent electrical conductivity and abrasion resistance while minimizing reaction with a low melting point plating material such as zinc (Zn) and aluminum (Al) is used as the coating material.

The tungsten carbide (WC) powder is coated to have a predetermined coating thickness by spraying it onto the surface of the electrode at a high speed (S30). The tungsten carbide powder coating step (S30) is performed by a cold spray coating process that is capable of coating at room temperature without powder melting, in order to easily adjust coating thickness and prevent decarburization of tungsten carbide (WC).

Then, the surface of the electrode is coated in the tungsten carbide powder coating step (320), and the coated surface is polished to have a predetermined surface roughness by the polishing pad or the polishing machine (S40).

### (Examples)

Table 1 shows types of electrodes for spot welding. In a conventional example, a copper (Cu) alloy electrode is used as an uncoated electrode. A material used for each coating was used in the form of a powder, the size of the metal powder was in a range of 5 to 50 µm, and the tungsten carbide (WC) powder was in a range of 5 to 10 µm. After coating on the electrode, the surface of the coated surface was polished with the polishing pad 600 times, and a welding test was carried out. A steel sheet used for welding is a zinc (Zn) alloy-plated steel sheet with a thickness of 1.2 mm.
Table 2 shows spot welding conditions used.
Table 3 shows tensile strength measured by welding tensile specimens at 100-point intervals when welding under the same welding conditions.

A conventional electrode is reduced in welding strength after 100 points, and too many plated steel plates are attached thereto after 400 points, resulting in too much spatter, and the welding test was stopped.

Comparative Example 1 showed almost similar strength in terms of welding strength as compared with the conventional example, and the welding test was stopped by too much spatter occurrence after 300 or 400 points.

In Comparative Example 2, the welding strength was significantly lower than in the conventional example, and a welding electrode was attached to the plated steel sheet due to a reaction with the plating layer. As compared with the conventional example, in the invention example, the electrode maintained high strength up to 500 points, and reaction with the plating layer hardly occurred.

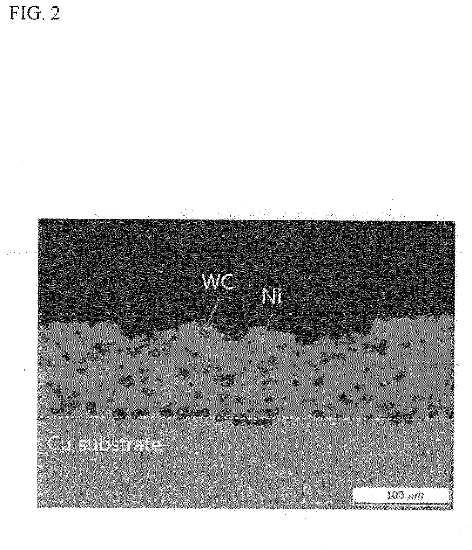

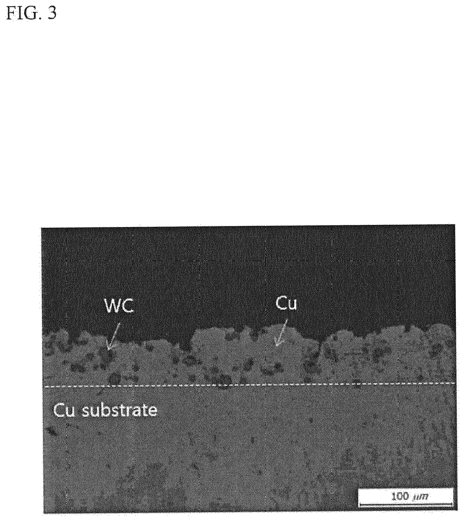

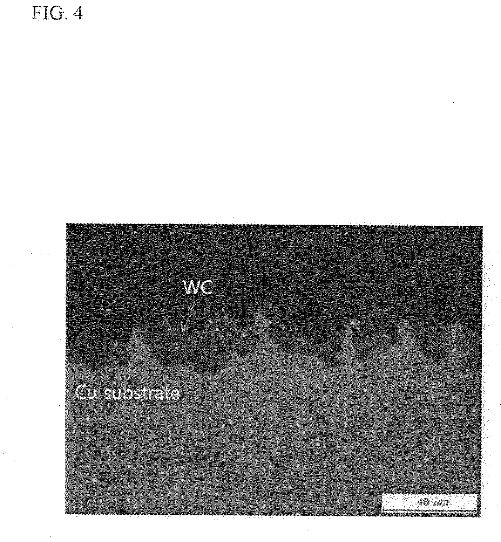

FIG. 2 to FIG. 4 show section photographs of a copper (Cu) base material coated according to Comparative Example 1, Comparative Example 2, and Example 1, respectively.

A coating layer formed by mixing the tungsten carbide (WC) powder with a metal powder such as copper (Cu) or nickel (Ni) has a uniform distribution of tungsten carbide (WC) in a metal matrix because of a characteristic of the cold spray coating process. It is seen that when the tungsten carbide (WC) powder is used, a coating layer is formed by depositing relatively harder tungsten carbide (WC) particles onto the base material as compared with the copper (Cu) base material.

**(Table 1)**

| | Coating method | Coating material | Coating thickness (µm) |
|---|---|---|---|
| Conventional example | Non-coating | - | - |
| Comparative Example 1 | Cold spray | WC-80Ni | 100 |
| Comparative Example 2 | Cold spray | WC-80Cu | 60 |
| Inventive Example 1 | Cold spray | WC | 20 |

**(Table 2)**

| Type | Welding force (kN) | Current (kA) | Conduction time (ms) | Retention time (ms) |
|---|---|---|---|---|
| AC welding machine | 2.6 | 10.5 | 270 | 40 |

**(Table 3)**

| Welding strength (kN) | Welding current (KA) | 100 points | 200 points | 300 points | 400 points | 500 points |
|---|---|---|---|---|---|---|
| Conventional example | 10.5 | 8.7 | 7.0 | 2.5 | 3.1 | Impossible |
| | | 7.3 | 6.3 | 3.1 | 3.2 | |
| Comparative Example 1 | 10.5 | 7.9 | 7.8 | 4.9 | 4.9 | Impossible |
| | | 8.9 | 8.8 | 8.2 | 2.0 | |
| Comparative Example 2 | 10.5 | 1.9 | 1.0 | 2.6 | Impossible | - |
| | | 0.8 | 1.6 | 0 | | |
| Inventive Example 1 | 10.5 | 9.1 | 9.4 | 7.77 | 9.20 | 7.79 |
| | | 9.4 | 9.3 | 9.31 | 6.01 | 7.90 |

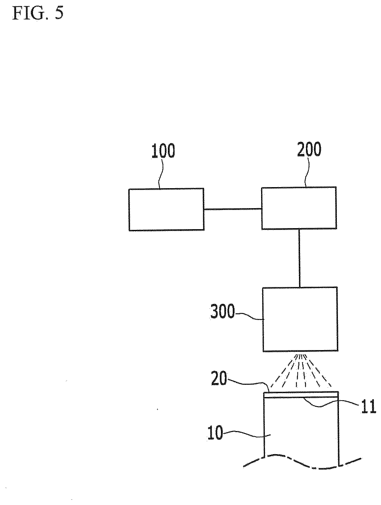

FIG. 5 illustrates a schematic diagram of a coating apparatus for a resistance-welding electrode according to an exemplary embodiment of the present invention.

A description of the coating apparatus for the resistance-welding electrode according to the exemplary embodiment of the present invention is the same as that of the coating method for the resistance-welding electrode except for a special description below, and thus a duplicated description thereof will be omitted.

Referring to FIG. 5, the coating apparatus for the resistance-welding electrode according to the exemplary embodiment of the present invention may include: a pulverizer 100 for pulverizing tungsten carbide (WC), which is a coating materials for being coated on a surface 11 of an electrode 10, into a powder having a predetermined average particle size;
an accelerator 200 for accelerating the tungsten carbide (WC) powder pulverized in the pulverizer 100 under a predetermined heating temperature and pressure condition together with an injection gas at room temperature; and
a cold spray coater 300 disposed at an upper side of the surface 11 of the electrode 10 to form a coating layer 20 having a predetermined coating thickness by spraying the injection gas accelerated by the accelerator 200 to the surface 11 of the electrode 10 at a high speed together with the tungsten carbide (WC) powder.

A resistance-welding electrode may be manufactured by the coating method or the coating apparatus for the resistance-welding electrode.

The resistance-welding electrode may include the electrode surface 11 constituting an outer surface of the electrode 10, and
the coating layer 20 formed to have the predetermined coating thickness by spraying the tungsten carbide (WC) powder, which is a coating material to be coated on the electrode surface 11, at a high speed under a predetermined heating temperature and pressure condition together with an injection gas by a cold spray coating process that is capable of coating at room temperature without powder melting.

Herein, the tungsten carbide (WC) powder may contain tungsten carbide (WC) in a range of 95 wt% or more and less than 100 wt%, at least one material selected from a group including Co, Ni, Cu, and Cr or alloys thereof as a remnant, and other inevitable impurities.

In addition, the coating layer 20 may be formed by depositing the tungsten carbide (WC) powder particles on the electrode surface 11 in a depth direction.

The average particle size of the tungsten carbide powder may be in a range of 1 µm to 50 µm.

The coating thickness may be in a range of 10 µm to 100 µm.

In addition, the depth of the tungsten carbide (WC) powder particles deposited on the electrode surface 11 in the coating layer 20 may be between 5 µm and 50 µm, inclusive.

Herein, the depth direction of the electrode surface 11 indicates a direction in which the electrode 10 extends upward and downward, that is, a direction from the electrode surface 11 to an interior of the electrode 10, as shown in FIG. 5.

The coating layer 20 of the electrode surface 10 may be polished to have predetermined surface roughness by a polishing machine (not illustrated).

The injection gas may be formed to include one of nitrogen and helium, or a mixture of these gases.

The heating temperature of the injection gas may be in a range of 200 °C to 1100 °C.

The predetermined pressure of the injection gas may be in a range of 15 bar to 75 bar.

## Claims

1. A coating method for a resistance-welding electrode, the coating method comprising:
a tungsten carbide preparation step for preparing tungsten carbide (WC) as a coating material for being coated on an electrode surface;
a tungsten carbide powder formation step for forming the tungsten carbide (WC) into a tungsten carbide powder having a predetermined average particle size; and
a tungsten carbide powder coating step for performing coating with a predetermined coating thickness to the electrode surface by spraying the tungsten carbide (WC) powder at a high speed by a cold spray coating process that is capable of coating at room temperature without powder melting,
wherein the tungsten carbide (WC) powder formed in the tungsten carbide powder formation step contains tungsten carbide (WC) in a range of 95 wt% or more and less than 100 wt%, at least one material selected from a group including Co, Ni, Cu, and Cr or alloys thereof as a remnant, and other inevitable impurities.

2. The coating method of claim 1, wherein
the average particle size of the tungsten carbide powder in the tungsten carbide powder forming step is in a range of 1 µm to 50 µm.

3. The coating method of claim 1, wherein
the coating thickness is in a range of 10 µm to 100 µm.

4. The coating method of claim 1, wherein
the resistance-welding electrode obtained according to the coating method has a welding strength of 6 kN or more at 400 points or more in the case of spot welding.

5. The coating method of claim 1, further comprising
a coated surface polishing step for polishing a coated surface after coating the electrode surface in the tungsten carbide powder coating step.

6. The coating method of claim 1, wherein
the cold spray coating process accelerates the injection gas under a predetermined heating temperature and pressure condition to cause the tungsten carbide powder to collide with the electrode surface to be deposited thereon.

7. The coating method of claim 6, wherein
the injection gas is formed to include one of nitrogen and helium, or a mixture of these gases.

8. The coating method of claim 7, wherein
the heating temperature of the injection gas is in a range of 200 °C to 1100°C.

9. The coating method of claim 8, wherein
the predetermined pressure of the injection gas is in a range of 15 bar to 75 bar.

10. The coating method of claim 9, wherein
the tungsten carbide (WC) powder particles are deposited in the depth direction on the electrode surface to form a coating layer in the tungsten carbide powder coating step.

11. The coating method of claim 10, wherein
a depth of the tungsten carbide (WC) powder particles deposited on the electrode surface in the coating layer is between 5 µm and 50 µm, inclusive.

12. A resistance-welding electrode comprising:
an electrode surface constituting an outer surface of the electrode; and
a coating layer formed to have a predetermined coating thickness by spraying a tungsten carbide (WC) powder, which is a coating material to be coated on the electrode surface, at a high speed under a predetermined heating temperature and pressure condition together with an injection gas by a cold spray coating process that is capable of coating at room temperature without powder melting,
wherein the tungsten carbide (WC) powder contains tungsten carbide (WC) in a range of 95 wt% or more and less than 100 wt%, at least one material selected from a group including Co, Ni, Cu, and Cr or alloys thereof as a remnant, and other inevitable impurities, and
the coating layer is formed by depositing the tungsten carbide (WC) powder particles in a depth direction on the electrode surface.

13. The resistance-welding electrode of claim 12, wherein
the average particle size of the tungsten carbide powder is in a range of 1 µm to 50 µm.

14. The resistance-welding electrode of claim 12, wherein
the coating thickness is in a range of 10 µm to 100 µm.

15. The resistance-welding electrode of any one of claim 12 to claim 14, wherein
a depth of the tungsten carbide (WC) powder particles deposited on the electrode surface in the coating layer is between 5 µm and 50 µm, inclusive.

16. The resistance-welding electrode of claim 12, wherein
the injection gas is formed to include one of nitrogen and helium, or a mixture of these gases.

17. The resistance-welding electrode of claim 16, wherein
the heating temperature of the injection gas is in a range of 200 °C to 1100 °C.

18. The resistance-welding electrode of claim 17, wherein
the predetermined pressure of the injection gas is in a range of 15 bar to 75 bar.
